# EUROPEAN PATENT APPLICATION

(11) **EP 0 885 803 A2**
(43) Date of publication of application: **23.12.1998**
(21) Application number: 98111073.7
(22) Date of filing: 17.06.1998
(51) Int. Cl.: B63H 9/06, B32B 27/12

(54) **PBO reinforced sails and sailcloth**

(30) Priority: 17.06.1997 US 877076
(71) Applicant: McGhee, James M., Woodstock, Connecticut 06281 (US)
(72) Inventor: McGhee, James M., Woodstock, Connecticut 06281 (US)
(74) Representative: Klingseisen, Franz, Dipl.-Ing.

(57) **Abstract**

Sails (15) and sailcloth are provided having a layer of material reinforced by a plurality of load bearing strands/yarns/fibers having an initial modulus of over 1,000 grams/denier. The strands have low creep, stretching less than 30% under a constant load after about 20 minutes. The strands have long flex life, retaining at least about 70% of their initial breaking strength after about 60 bend cycles. The strands have a melt temperature of over 300°F.

## Description

### Field of the Invention

The invention relates to sails and sailcloth for making sails, and more particularly to sails and sailcloth reinforced with high modulus, load-bearing strands, yarns or fibers.

### Background of the Invention

Sails and sailcloth including high modulus, load-bearing strands, yarns or fibers are well known in the art. In the case of sails, the strands are typically adhered, taped or stitched directly to the sail which may be cut as a single piece of material or formed from a plurality of panels. In the case of sailcloth, the strands are typically attached in a mechanized fashion to another layer of material to prepare a continuous web. The sailcloth may then be cut, and stitched/glued/taped into panels/sails in the conventional manner.

U.S. Patent No. 4,679,519 to Linville discloses a laminated sailcloth incorporating a weft-free warp of high modulus reinforcing fibers. U.S. Patent No. 4,593,639 to Conrad discloses a sail manufactured by directly adhering high modulus reinforcing strands thereto. In these patents, and others, the motivation for using load-bearing strands was to increase the strength to weight ratio of sails to improve performance of sailboats.

Kevlar® 49 is a high modulus fiber (895 grams/denier) which has been widely and successfully used to make lighter, stronger sails which improve sailboat performance. Not all high-modulus fibers, however, are suitable for use as load-bearing strands in sails and sailcloth. High tenacity carbon fiber has an initial modulus of about 1,300-3,000 grams/denier and can be used to make lighter sailcloth/sails than Kevlar® 49, however, it has not been successfully commercialized as a sailcloth/sail reinforcement since it may break after fewer than 60 bend cycles.

Spectra® fiber has an initial modulus of about 1,150 grams/denier, however, it has many properties which make it disadvantageous for use in reinforcing sails. Spectra® strands are relatively slippery, requiring more adhesive to adhere them to other layers of material, and thereby increasing the cost and weight of the sailcloth/sail. Spectra® strands also have a relatively low melt temperature so that adhering the strands with either heat-activated or melt adhesives requires more time and care, increasing the cost of the sailcloth/sail. Spectra® strands are also "creepy" which permits sailcloth/sails reinforced therewith to disadvantageously stretch over time with an applied load. Stretched sails loose their designed aerodynamic shape and require more frequent replacement to maintain a level of performance. "Creepy" reinforcing strands may also disadvantageously introduce shear forces tending to delaminate the sailcloth/sails.

What is desired, therefore, is sailcloth and sails reinforced by load-bearing strands having low creep and long flex life yet providing an initial modulus of over 1,000 grams/denier. Reinforcing strands which are relatively nonslippery, and have a high melt temperature are also desired.

### Summary of the Invention

Accordingly, it is object of the invention is to provide sails and sailcloth reinforced by load-bearing strands having an initial modulus over about 1,000 grams/denier.

A further object of the invention is to provide sails and sailcloth reinforced by relatively nonslippery load-bearing strands.

Another object of the invention to provide sails and sailcloth reinforced by load-bearing strands having low creep and long flex life.

Yet another object of the invention is to provide sails and sailcloth reinforced by load-bearing strands having a high melt temperature.

Still another object of the invention is to provide sails and sailcloth of the above character reinforced by PBO strands.

These and other objects are achieved by providing sails and sailcloth having a layer of material reinforced by a plurality of load bearing strands/yarns/fibers having an initial modulus of over 1,000 grams/denier. The strands have low creep, stretching less than 30% under a constant load after about 20 minutes. The strands have long flex life, retaining at least about 70% of their initial breaking strength after about 60 bend cycles. The strands preferably have a melt temperature of over 300°F, and most preferably do not melt. The strands are preferably formed from PBO.

Sails according to the invention may be formed from panels including a layer of the strands. Alternatively, sails according to the invention may be formed from a single piece of material onto which the strands are attached.

The invention and its particular features and advantages will become more apparent from the following detailed description considered with reference to the accompanying drawings.

### Brief Description of the Drawings

FIG. 1 is an exploded, isometric view of a sailcloth in accordance with the invention.

FIG. 2 is a plan view of sail in accordance with the invention made from segments and panels of the sailcloth of FIG. 1.

FIG. 3 is a schematic representation of an apparatus and process for the continuous manufacture of the sailcloth of FIG. 1.

FIG. 4 is a plan view of a sail in accordance with the invention in which reinforcement is directly attached to the sail or panels.

### Detailed Description of the Invention

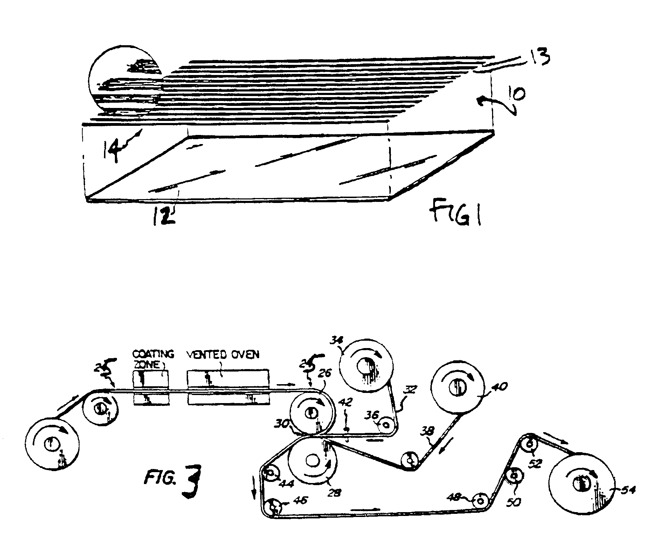

FIG. 1 depicts a sailcloth 10 in accordance with the invention. Sailcloth comprises at least a first layer of material 12 and a layer 14 of reinforcing strands/yarns/fibers/tapes 13. Material 12 is preferably provided as film, but it is understood that woven cloth, scrim, knit fabric, a reinforcing strand layer, sailcloth and other material may also be used.

Layers 12, 14 are typically adhered together as a laminate. Suitable adhesives include thermosetting resins such as Adcote 122® which is commercially available from Morton Chemical. As described in more detail below with reference to FIG. 3, pressure may also be used to improve adhesion and reduce undesirable delamination.

Strands/yarns/fibers/tapes 13 may be twisted, untwisted, bundled, braided, monofilaments, bonded together, loose, bonded to a substrate material, formed into tapes, or otherwise without departing from the scope of the invention. Although the strands are shown aligned in parallel with one another, it is understood that they may be aligned in a converging pattern, diverging pattern, X-Ply™ pattern in accordance with U.S. Patent No. 5,403,641 (the disclosure of which is incorporated herein by reference).

The preferred material for forming the load bearing reinforcing strands of the invention is polyparaphenylene benzobisoxazole, or polybenzoxazole or PBO which is commercially available from Toyobo K.K. of Japan. It is understood, however, that other fibers having this unique combination of features may also be used. PBO provides the unique combination of features which we have discovered provides lighter, stronger sailcloth/sails, yielding improved sailboat performance.

| Fiber | Denier | Initial Modulus | Melt Temperature | Creep | Flex Life (6) |
|---|---|---|---|---|---|
| PBO | 1000 | 2000 | N/A | 0 | 27% |
| Spectra 1000 | 1300 | 1150 (5) | 296°F | 40% | not effected |
| Kevlar 49 | 1140 d. | 885 | 800°F (1) | 0 | 28% |
| Carbon | Equiv. (2) | 1300-3000 (3) | N/A | 0 | 100% |

| | | | | | |
|---|---|---|---|---|---|
| Notes: 1. Does not melt, decomposes. | | | | | |
| 2. Carbon is not sold in denier but in filament count, which was converted to denier for selection of the closest style. | | | | | |
| 3. Carbon fiber is custom made for end uses and varies considerably. | | | | | |
| 4. Measurement of elongation at a constant load of 15 lbs. | | | | | |
| 5. Because of creep property, modulus is greatly dependent on the speed at which the fiber is tested. As speed decreases, modulus decreases. | | | | | |
| 6. % lost after 60 bend cycles. | | | | | |

Although not depicted, it is also understood that other layers of material, including reinforcing layers, may be added to sailcloth 10 either at the time of addition of reinforcing layer 14, of subsequently during the construction of a sail or otherwise. The number and type of reinforcing or other layers of material will be determined by the strength and durability required in the sailcloth.

FIG. 2 depicts a sail 15 in accordance with the invention formed from panels A-E in the conventional manner, such as broadseaming. Although panels A-E are arranged along foot 18 of sail 15 and intersect luff 20 and leech 16 of sail 15, it is understood that panels A-E may also be aligned along the luff or leech so as to intersect the other two edges of sail 15. Each of panels A-E is formed from a plurality of segments 22 which are individual pieces of sailcloth 10 joined at seams 24 by taping, gluing and/or stitching. It is understood that adjacent segments 22 may be the same or may comprise a different number of total layers, different strength of reinforcing layer, and the like. It is also understood that any of panels A-E may also comprise a layer of material comprising two or more segments 22. For example, a panel may be pieced together from segments 22 of sailcloth having different weights and then laminated or combined with a second layer of material coextensive with the panel in accordance with U.S. Patent Nos. 4,945,848, and 5,097,783 (the disclosures of which are incorporated herein by reference).

FIG. 3 depicts a laminating machine used to make sailcloth 10 and/or to add a coextensive layer of material to one or more panels A-E. Layer 12 of material is provided as a web 25 which is coated with adhesive and heated or otherwise treated as necessary to activate the adhesive. Layer 14 of reinforcing strands is provided as a web 32 from spools 34 via tensioning roller 36 for combination with web 25 at nip 30 between rolls 26, 28. A comb device 42 separates strands 13 by a desired spacing before they are pressed together with layer 12. A third layer 38 of material may, if desired, be provided on spool 40 for combination with layers 12, 14 at nip 30. Rollers 44, 46, 48, 50 and 52 permit cooling of the finished, laminated sailcloth and properly tension it for storage on spool 54. It is understood that if strands 13 are to be added to sailcloth 10 in, for example, an X-Ply™ pattern, comb device 42 may be replaced with the appropriate apparatus from U.S. Patent No. 5,403,641 or the like.

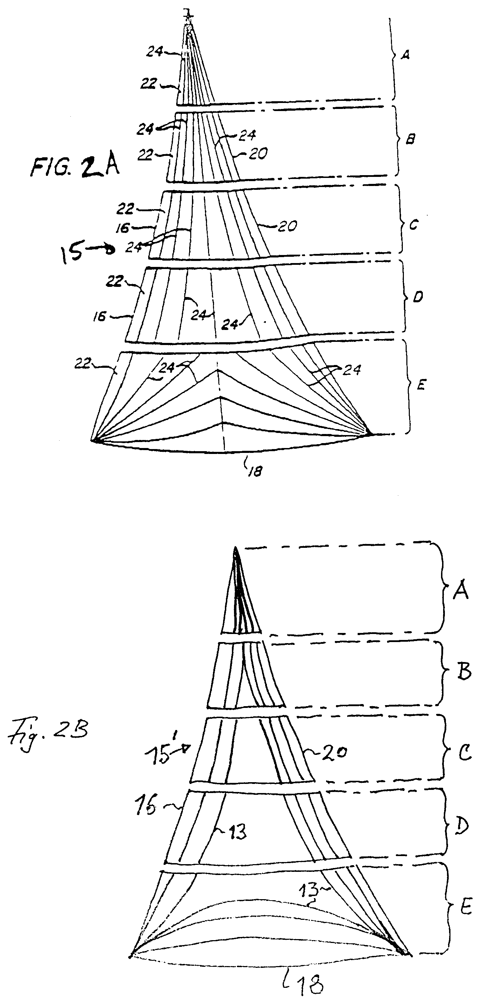

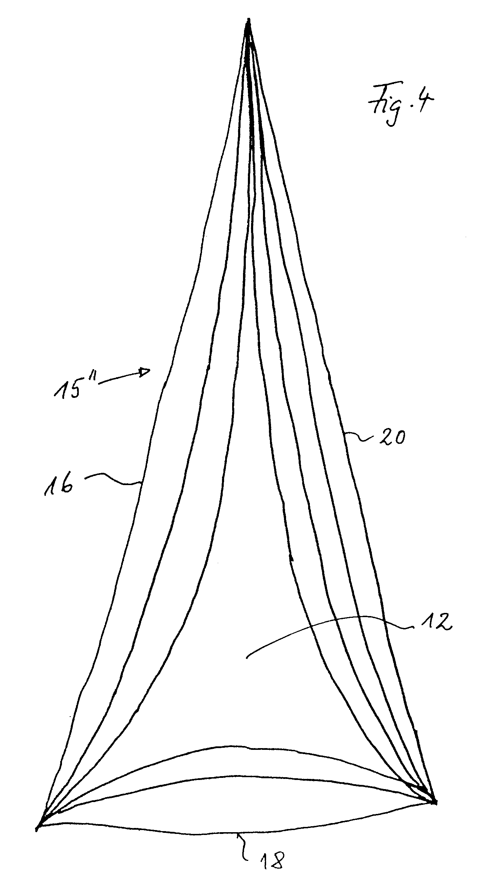

Referring now briefly to FIG. 2B, strands 13 may also be directly attached to each of panels A-E for reinforcing sail 15'. Fig. 4 depicts a sail 15'' in accordance with the invention in which strands 13 are directly attached to a single layer 12 of material.

Although the invention has been described with reference to a particular arrangement of parts, features and the like, these are not intended to exhaust all possible arrangements or features, and indeed many other modifications and variations will be ascertainable to those of skill in the art.

## Claims

1. Sailcloth comprising a layer of material reinforced by a plurality of load-bearing strands having low creep, long flex life, and an initial modulus of over 1,000 grams/denier.

2. Sails comprising at least two panels, each panel including a first layer of material reinforced by a plurality of load-bearing strands having low creep, long flex life, and an initial modulus of over 1,000 grams/denier.

3. Sails comprising a layer of material reinforced by a plurality of load-bearing strands having low creep, long flex life, and an initial modulus of over 1,000 grams/denier.

4. Sailcloth or sails according to one of the preceding claims, wherein said load-bearing strands stretch less than about 30 % under a constant load after about 20 minutes.

5. Sailcloth or sails according to one of the preceding claims, wherein said load-bearing strands retain at least about 70 % of their initial breaking strength after about 60 bend cycles.

6. Sailcloth or sails according to one of the preceding claims, wherein said load-bearing strands have a melt temperature of over about 300°F.

7. Sailcloth or sails according to one of the preceding claims, wherein said load-bearing strands are PBO.

8. Sailcloth or sails according to one of the preceding claims, wherein said layer of material is a single piece of material.

9. Sailcloth or sails according to one of the preceding claims, wherein said layer of material is at least two pieces of material joined together.

10. Sailcloth or sails according to one of the preceding claims, wherein said load-bearing strands are less slippery than Spectra strands.
